# FASCICULE DE BREVET EUROPEEN

(11) **EP 3 606 789 B1**
(45) Date de publication et mention de la délivrance du brevet: **10.03.2021**
(21) Numéro de dépôt: 18718598.8
(22) Date de dépôt: 29.03.2018
(51) Int. Cl.: B60R 5/00, B60R 7/04

(54) **AGENCEMENT D'UN MODULE DE RANGEMENT SUR UN PAVILLON DE VÉHICULE AUTOMOBILE**
ANORDNUNG EINES SPEICHERMODULS AUF EINEM KRAFTFAHRZEUGDACH
STORAGE MODULE ARRANGEMENT ON AN AUTOMOTIVE VEHICLE ROOF

(30) Priorité: 06.04.2017 FR 1753002
(43) Date de publication de la demande: 12.02.2020
(73) Titulaire: Renault S.A.S., 92100 Boulogne-Billancourt (FR)
(72) Inventeur: RASPAIL, Bruno, 91470 Boullay Les Troux (FR); SOMMER, Xavier, 92500 Rueil Malmaison (FR); MORASSE, Louis, 78000 Versailles (FR)
(86) Numéro de dépôt international: PCT/FR2018/050779
(87) Numéro de publication internationale: WO 2018/185405

(56) Documents cités:
- WO-A1-2012/047155
- DE-A1- 3 721 377
- DE-A1- 19 957 854
- DE-A1-102007 037 211
- FR-A1- 2 682 657
- JP-U- H0 426 845

## Description

L'invention concerne un véhicule automobile présentant une cabine à l'avant et une zone de chargement à l'arrière, et un agencement d'un module de rangement intérieur sur un pavillon comportant une partie transversale avant s'étendant sur toute la largeur d'un pare-brise du véhicule, en avant d'un siège conducteur et d'un siège passager.

Les utilisateurs de véhicules automobiles, notamment de véhicules utilitaires, ont souvent besoin de rangements nombreux et optimisés afin de leur permettre de ranger de manière pratique leur matériel mais aussi leurs documents administratifs ou leurs affaires personnelles, par exemple.

On connait dans l'état de la technique le document DE102004005482 décrivant un véhicule comportant des casiers ouverts portés par une partie avant du pavillon située le long du pare-brise. Ces rangements, s'ils sont facilement accessibles par les occupants des sièges avant, restent cependant limités et de petite taille. De plus, l'accès par le conducteur aux rangements situés au-dessus du siège passager peut être difficile. Le document JPH0426845U montre un véhicule automobile selon le préambule de la revendication 1.

Afin de pallier ces inconvénients, l'invention a pour objet un agencement d'un module de rangement pour pavillon de véhicule qui soit de grande taille, pratique et polyvalent, qui propose une pluralité de compartiments de rangements accessibles pour une seule personne et qui permette de retrouver facilement les objets qui y sont rangés. L'invention a aussi pour objet un agencement d'un module de rangement qui soit peu onéreux à fabriquer, et qui puisse être facilement intégré dans le véhicule, que ce soit en série, en option ou en deuxième monte.

A cet effet, l'invention propose un véhicule automobile présentant une cabine à l'avant et une zone de chargement à l'arrière, et un agencement d'un module de rangement comme dans la revendication 1.

Selon d'autres caractéristiques de l'invention:
- L'agencement comporte une paroi inférieure s'étendant selon un plan sensiblement parallèle à celui du pavillon le long des trois zones de rangement.
- La paroi inférieure du module est unique et formée d'une pièce.
- La première zone comporte une ouverture d'accès située sensiblement à l'aplomb d'un volant du véhicule, délimitée par au moins la paroi inférieure du module, une garniture de brancard et une garniture du pavillon, et orientée selon un plan sensiblement transversal.
- La deuxième zone s'étend sensiblement jusqu'à une paroi de séparation de la cabine et de la zone de chargement et comporte une ouverture d'accès tournée vers le conducteur et délimitée par la paroi inférieure, une garniture du pavillon et la paroi de séparation, et s'étendant dans un plan vertical.
- Un bord inférieur de l'ouverture d'accès comporte un rebord vertical.
- Une cloison verticale s'étend sur au moins une partie de la hauteur du module entre la première et la deuxième zones.
- La troisième zone s'étend jusqu'à la paroi de séparation entre la cabine et la zone de chargement, et comporte une ouverture d'accès arrière délimitée par la paroi inférieure du module et la garniture de pavillon et débouchant dans la paroi de séparation.
- Une cloison verticale sépare la deuxième et la troisième zones.
- En arrière de la troisième zone de rangement, le pavillon est muni d'un support en U de façon à soutenir un objet long disposé dans la troisième zone.

D'autres caractéristiques et avantages de l'invention apparaîtront à la lecture de la description d'exemples de réalisation d'un module de rangement en référence aux dessins annexés dans lesquels :
- La figure 1 est une vue de dessus d'un véhicule comportant un agencement d'un module de rangement selon l'invention.
- La figure 2 est vue latérale en perspective du véhicule comportant l'agencement selon l'invention de la figure 1.

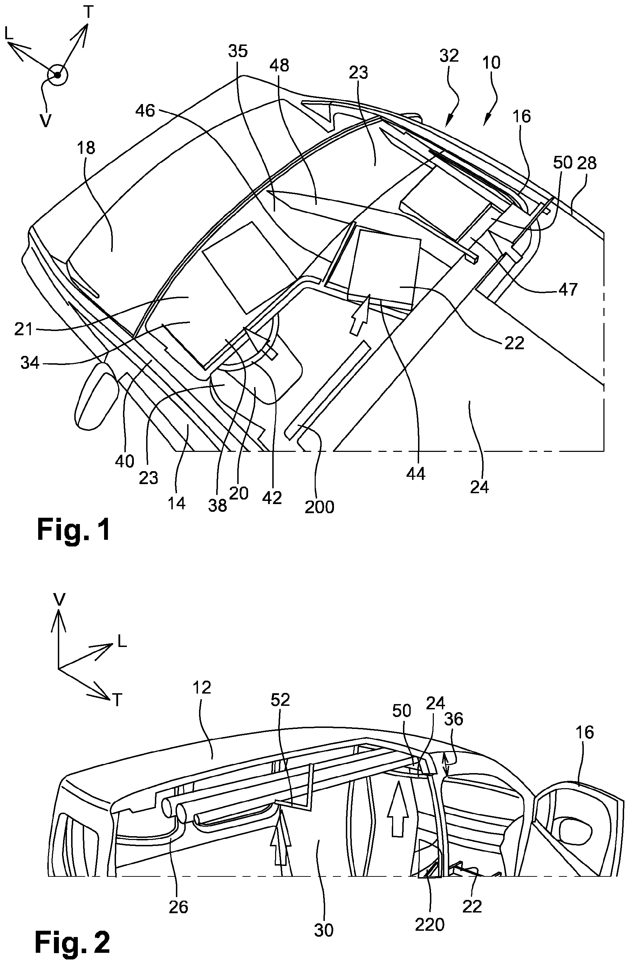

Dans la description qui suit, nous prendrons à titre non limitatif une orientation longitudinale, verticale et transversale indiquée par le trièdre L,V,T des figures 1 et 2.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté aux figures 1 et 2, un véhicule 10 comporte un pavillon 12, des portes latérales avant 14 et 16 et un pare-brise 18. Un siège conducteur 20 est disposé du côté de la porte 14 et un siège passager 22 du côté de la porte 16. Cette zone du véhicule constitue une cabine 23. En arrière des sièges 20 et 22, le véhicule 10 comporte un espace de chargement 24, comportant une paroi latérale 26 située dans le prolongement de la porte 20 et une paroi latérale 28 située dans le prolongement de la porte 22. La cabine 23 et l'espace de chargement 24 sont séparés par une paroi transversale 30 s'étendant le long des dossiers 200 et 220 des sièges 20 et 22.

Le véhicule 10 comporte un module de rangement 32 fixé au pavillon 12. Le module de rangement 32 présente une paroi inférieure 34 sensiblement horizontale. La paroi inférieure 34 s'étend à distance du pavillon 12 de façon à définir un espace 36.

La paroi 34 peut être formée d'une pièce unique moulée.

Le module de rangement 32 présente une partie avant transversale 35 s'étendant le long du pare-brise 18 sur toute la largeur du véhicule 10.

Le module de rangement comporte trois zones de rangements distinctes Z1, Z2 et Z3.

La zone de rangement Z1 correspond à une portion de la partie transversale avant 35 du module de rangement 32. Elle s'étend transversalement depuis la porte latérale 14, c'est-à-dire du côté du conducteur, le long du pare-brise et mesure environ entre la moitié et les deux-tiers de la largeur de la partie avant 35 du véhicule. On entend par « largeur » de la partie avant 35 sa dimension selon une direction transversale.

La zone de rangement Z1 comporte une ouverture d'accès 38 délimitée par au moins la paroi inférieure 34, une garniture de pavillon 12 et une garniture de brancard 40, et qui s'étend selon un plan transversal sensiblement au droit d'un volant 42 situé devant le siège conducteur 20.

La zone de rangement Z2 est disposée dans une région centrale et longitudinale du véhicule, entre les sièges conducteur 20 et passager 22. Ainsi, la zone de rangement Z2 s'étend longitudinalement depuis la zone de rangement Z1 jusqu'à la paroi transversale de séparation 30.

La zone de rangement Z2 présente une ouverture d'accès 44 latérale délimitée par au moins la paroi inférieure 34, la garniture de pavillon 12 et la paroi de séparation 30. L'ouverture d'accès 44 est donc tournée vers le siège conducteur. Pour des raisons d'ergonomie, le plan vertical dans lequel est comprise l'ouverture d'accès 44 n'est pas longitudinal, mais forme un angle avec un plan longitudinal du véhicule de sorte qu'une partie arrière de l'ouverture 44 est plus éloignée du conducteur qu'une partie avant.

De façon à éviter que des objets rangés dans le module 32 ne passent de la zone Z1 à la zone Z2 et inversement, il est prévu une cloison verticale 46 entre les zones Z1 et Z2. La cloison 46 peut s'étendre sur toute la hauteur de l'espace 36 ou seulement sur une partie de celle-ci.

Les zones Z1 et Z2 sont donc ouvertes sur la cabine 23 de façon que le conducteur puisse facilement y accéder et y ranger des documents de travail ou un ordinateur portable, par exemple.

Les bords inférieurs des ouvertures d'accès 38 et 44 des zones Z1 et Z2 peuvent être munis d'un rebord (non représenté) apte à éviter le glissement vers la cabine 23 d'un objet entreposé dans ces zones.

La zone Z3 s'étend sensiblement longitudinalement au-dessus du siège passager 22 entre le pare-brise 18 et la paroi de séparation 30. Elle donc constituée par une partie latérale de la partie transversale avant 35 et se prolonge vers l'arrière par une partie longitudinale 47 jusqu'à la paroi de séparation 30.

La zone Z3 est de plus délimitée latéralement par la zone Z2 d'une part et la porte latérale 16 et la paroi latérale 28 d'autre part. Une cloison 48 s'étendant sur toute la hauteur de l'espace 36 entre la paroi inférieure 34 et la garniture de pavillon 12 est prévue entre la zone Z2 et Z3.

La zone Z3 comporte une ouverture 50 dirigée vers la zone de chargement 24 du véhicule. Elle est délimitée par la cloison 48, la paroi inférieure 34, la paroi latérale 28 et la garniture de pavillon 12. L'ouverture 50 s'étend selon un plan transversal et débouche dans la paroi de séparation 30.

La zone Z3 permet d'entreposer des objets longs, pouvant être accessibles soit depuis des portes latérales coulissantes, soit pas des portes arrière du véhicule. De façon à éviter de surcharger le module de rangement 32 ou pour éviter qu'un objet ne glisse, il peut être prévu une galerie formant support 52 disposée sur le pavillon 12 à l'intérieur de la zone de chargement 24. La galerie 52 présente un profil en forme de U et peut être escamotée contre le pavillon ou contre une partie latérale du véhicule lorsqu'elle n'est pas utilisée.

Le module de rangement 32 composé de la paroi inférieure 34 et des parois internes 46 et 48 peut être fabriqué d'une pièce et être ainsi directement rapporté sur la garniture de pavillon du véhicule.

Selon un autre mode de réalisation non représenté, la conception du module de rangement peut également être modulaire, les zones Z1 et Z3 étant formées par des éléments indépendants pouvant être assemblés de part et d'autre de la zone Z2 formant alors support. Ce dispositif permettrait alors d'offrir soit des zones Z1 et Z3 symétriques par rapport à Z2 soit des zones Z1 et Z3 non symétriques qui pourraient être adaptés en fonction de la version du véhicule, conduite à droite ou à gauche.

L'agencement selon l'invention présente ainsi de nombreux avantages :
- Il permet d'améliorer l'accès au rangement dans la partie cabine lorsque le conducteur est seul.
- Il permet d'augmenter le nombre de rangements accessibles au conducteur.
- Il permet de facilement compartimenter des zones de rangement entre cabine et zone de chargement.
- Il permet d'exploiter la hauteur de la cabine pour charger des objets longs tout en isolant les passagers avant des objets stockés au-dessus de leur tête.

## Revendications

1. Véhicule automobile présentant une cabine (23) à l'avant et une zone de chargement (24) à l'arrière, et un agencement d'un module de rangement intérieur (32) sur un pavillon (12) comportant une partie transversale avant (35) s'étendant sur toute la largeur d'un pare-brise (18) du véhicule, en avant d'un siège conducteur (20) et d'un siège passager (22), **caractérisé en ce que** le module de rangement (32) comprend :
- une première zone (Z1), située côté conducteur, constituée par une portion de la partie transversale avant (35) s'étendant depuis une porte conducteur (14) du véhicule et mesurant environ entre la moitié et les deux-tiers de la largeur totale de la partie transversale avant (35), et comportant une ouverture d'accès (38) située sensiblement à l'aplomb d'un volant (42) du véhicule
- une deuxième zone (Z2), constituée par un élément longitudinal s'étendant vers l'arrière du véhicule et entre le siège passager (20) et le siège conducteur (22) depuis la première zone (Z1) et comportant une ouverture d'accès (44) tournée vers le conducteur,
- une troisième zone (Z3), située côté passager, constituée par une portion latérale de la partie transversale avant (35) du module de rangement (32) prolongée vers l'arrière par une partie longitudinale (47) s'étendant entre la deuxième zone (Z2) et une porte passager (16) du véhicule et comportant une ouverture d'accès arrière (50).

2. Véhicule automobile présentant un agencement d'un module de rangement (32) selon la revendication 1, **caractérisé en ce qu'**il comporte une paroi inférieure (34) s'étendant selon un plan sensiblement parallèle à celui du pavillon (12) le long des trois zones (Z1, Z2, Z3) de rangement.

3. Véhicule automobile présentant un agencement d'un module de rangement (32) selon la revendication 2, **caractérisé en ce que** la paroi inférieure (34) du module (32) est unique et formée d'une pièce.

4. Véhicule automobile présentant un agencement d'un module de rangement (32) selon la revendication 2 ou 3, **caractérisé en ce que** l'ouverture d'accès (38) de la première zone (Z1) est, délimitée par au moins la paroi inférieure (34) du module (32), une garniture de brancard (42) et une garniture du pavillon (12), et orientée selon un plan sensiblement transversal.

5. Véhicule automobile présentant un agencement d'un module de rangement selon l'une des revendications 2 à 4, **caractérisé en ce que** la deuxième zone (Z2) s'étend sensiblement jusqu'à une paroi de séparation (30) de la cabine (23) et de la zone de chargement (24) et **en ce que l'ouverture d'accès (44)** est délimitée par la paroi inférieure (34), une garniture du pavillon (12) et la paroi de séparation (30), et s'étendant dans un plan vertical.

6. Véhicule automobile présentant un agencement d'un module de rangement (32) selon la revendication 4 ou 5, **caractérisé en ce qu'**un bord inférieur de l'ouverture d'accès (38, 44) comporte un rebord vertical.

7. Véhicule automobile présentant un agencement d'un module de rangement (32) selon l'une des revendications 1 à 6, **caractérisé en ce qu'**une cloison verticale (46) s'étend sur au moins une partie d'une hauteur (36) du module (32) entre la première zone (Z1) et la deuxième zone (Z2).

8. Véhicule automobile présentant un agencement d'un module de rangement (32) selon l'une des revendications 2 à 7, **caractérisé en ce que** la troisième zone (Z3) s'étend jusqu'à la paroi de séparation (30) entre la cabine (23) et la zone de chargement (24), **et en ce que** l'ouverture d'accès arrière (50) est délimitée par la paroi inférieure (34) du module (32) et une garniture du pavillon (12) et débouchant dans la paroi de séparation (30).

9. Véhicule automobile présentant un agencement d'un module de rangement (32) selon l'une des revendications 1 à 8, **caractérisé en ce qu'**une cloison verticale (48) sépare la deuxième zone (Z2) et la troisième zone (Z3).

10. Véhicule automobile présentant un agencement d'un module de rangement (32) selon la revendication 8, **caractérisé en ce que,** en arrière de la troisième zone de rangement (Z3), le pavillon (12) est muni d'un support en U (52) de façon à soutenir un objet long disposé dans la troisième zone (Z3).

## Patentansprüche

1. Kraftfahrzeug, welches vorn eine Kabine (23) und hinten einen Ladebereich (24) aufweist, und eine Anordnung eines inneren Ablagemoduls (32) an einem Dach (12), das einen vorderen Querteil (35) aufweist, der sich über die gesamte Breite einer Windschutzscheibe (18) des Fahrzeugs erstreckt, vor einem Fahrersitz (20) und einem Beifahrersitz (22), **dadurch gekennzeichnet, dass** das Ablagemodul (32) umfasst:
- einen ersten Bereich (Z1), der sich auf der Fahrerseite befindet, aus einem Abschnitt des vorderen Querteils (35) besteht, der sich von einer Fahrertür (14) des Fahrzeugs aus erstreckt und ungefähr die Hälfte bis zwei Drittel der Gesamtbreite des vorderen Querteils (35) einnimmt, und eine Zugangsöffnung (38) aufweist, die sich im Wesentlichen senkrecht über einem Lenkrad (42) des Fahrzeugs befindet,
- einen zweiten Bereich (Z2), der aus einem Längselement besteht, das sich von dem ersten Bereich (Z1) aus zur Rückseite des Fahrzeugs hin und zwischen dem Beifahrersitz (20) und dem Fahrersitz (22) erstreckt und eine Zugangsöffnung (44) aufweist, die dem Fahrer zugewandt ist,
- einen dritten Bereich (Z3), der sich auf der Beifahrerseite befindet, aus einem seitlichen Abschnitt des vorderen Querteils (35) des Ablagemoduls (32) besteht, der nach hinten durch einen Längsteil (47) verlängert ist, sich zwischen dem zweiten Bereich (Z2) und einer Beifahrertür (16) des Fahrzeugs erstreckt und eine hintere Zugangsöffnung (50) aufweist.

2. Kraftfahrzeug, welches eine Anordnung eines Ablagemoduls (32) nach Anspruch 1 aufweist, **dadurch gekennzeichnet, dass** sie eine untere Wand (34) aufweist, die sich in einer Ebene, die im Wesentlichen zu derjenigen des Daches (12) parallel ist, entlang der drei Ablagebereiche (Z1, Z2, Z3) erstreckt.

3. Kraftfahrzeug, welches eine Anordnung eines Ablagemoduls (32) nach Anspruch 2 aufweist, **dadurch gekennzeichnet, dass** die untere Wand (34) des Moduls (32) eine einzige ist und einstückig ausgebildet ist.

4. Kraftfahrzeug, welches eine Anordnung eines Ablagemoduls (32) nach Anspruch 2 oder 3 aufweist, **dadurch gekennzeichnet, dass** die Zugangsöffnung (38) des ersten Bereichs (Z1) von wenigstens der unteren Wand (34) des Moduls (32), einer Längsträgerverkleidung (42) und einer Innenverkleidung des Daches (12) begrenzt wird und in einer im Wesentlichen quer verlaufenden Ebene ausgerichtet ist.

5. Kraftfahrzeug, welches eine Anordnung eines Ablagemoduls nach einem der Ansprüche 2 bis 4 aufweist, **dadurch gekennzeichnet, dass** sich der zweite Bereich (Z2) im Wesentlichen bis zu einer Trennwand (30) der Kabine (23) und des Ladebereichs (24) erstreckt, und dadurch, dass die Zugangsöffnung (44) von der unteren Wand (34), einer Innenverkleidung des Daches (12) und der Trennwand (30) begrenzt wird und sich in einer vertikalen Ebene erstreckt.

6. Kraftfahrzeug, welches eine Anordnung eines Ablagemoduls (32) nach Anspruch 4 oder 5 aufweist, **dadurch gekennzeichnet, dass** ein unterer Rand der Zugangsöffnung (38, 44) eine vertikale Randleiste aufweist.

7. Kraftfahrzeug, welches eine Anordnung eines Ablagemoduls (32) nach einem der Ansprüche 1 bis 6 aufweist, **dadurch gekennzeichnet, dass** sich eine vertikale Zwischenwand (46) über wenigstens einen Teil einer Höhe (36) des Moduls (32) zwischen dem ersten Bereich (Z1) und dem zweiten Bereich (Z2) erstreckt.

8. Kraftfahrzeug, welches eine Anordnung eines Ablagemoduls (32) nach einem der Ansprüche 2 bis 7 aufweist, **dadurch gekennzeichnet, dass** sich der dritte Bereich (Z3) bis zu der Trennwand (30) zwischen der Kabine (23) und dem Ladebereich (24) erstreckt, und dadurch, dass die hintere Zugangsöffnung (50) von der unteren Wand (34) des Moduls (32) und einer Innenverkleidung des Daches (12) begrenzt wird und in die Trennwand (30) mündet.

9. Kraftfahrzeug, welches eine Anordnung eines Ablagemoduls (32) nach einem der Ansprüche 1 bis 8 aufweist, **dadurch gekennzeichnet, dass** eine vertikale Zwischenwand (48) den zweiten Bereich (Z2) und den dritten Bereich (Z3) trennt.

10. Kraftfahrzeug, welches eine Anordnung eines Ablagemoduls (32) nach Anspruch 8 aufweist, **dadurch gekennzeichnet, dass** das Dach (12) hinter dem dritten Ablagebereich (Z3) mit einer U-förmigen Stütze (52) versehen ist, um einen im dritten Bereich (Z3) angeordneten langen Gegenstand abzustützen.

## Claims

1. Motor vehicle having a cabin (23) at the front and a loading zone (24) at the rear, and an arrangement of an interior storage module (32) on a roof (12) comprising a front transverse part (35) extending over the entire width of a windshield (18) of the vehicle, in front of a driver's seat (20) and of a passenger seat (22), **characterized in that** the storage module (32) comprises:
- a first zone (Z1), situated on the driver's side, consisting of a portion of the front transverse part (35) extending from a driver's door (14) of the vehicle and measuring between approximately half and two thirds of the total width of the front transverse part (35), and comprising an access opening (38) situated substantially vertically above a steering wheel (42) of the vehicle,
- a second zone (Z2), consisting of a longitudinal element extending toward the rear of the vehicle and between the passenger seat (20) and the driver's seat (22) from the first zone (Z1) and comprising an access opening (44) turned toward the driver,
- a third zone (Z3), situated on the passenger side, consisting of a lateral portion of the front transverse part (35) of the storage module (32) extended backward by a longitudinal part (47) extending between the second zone (Z2) and a passenger door (16) of the vehicle and comprising a rear access opening (50).

2. Motor vehicle having an arrangement of a storage module (32) according to Claim 1, **characterized in that** it comprises a bottom wall (34) extending on a plane substantially parallel to that of the roof (12) along the three storage zones (Z1, Z2, Z3).

3. Motor vehicle having an arrangement of a storage module (32) according to Claim 2, **characterized in that** the bottom wall (34) of the module (32) is singular and formed in a single piece.

4. Motor vehicle having an arrangement of a storage module (32) according to Claim 2 or 3, **characterized in that** the access opening (38) of the first zone (Z1) is delimited by at least the bottom wall (34) of the module (32), a side-rail trim (42) and a roof trim (12), and oriented on a substantially transverse plane.

5. Motor vehicle having an arrangement of a storage module according to one of Claims 2 to 4, **characterized in that** the second zone (Z2) extends substantially to a separating wall (30) between the cabin (23) and the loading zone (24) and **in that** the access opening (44) is delimited by the bottom wall (34), a trim of the roof (12) and the separating wall (30), and extends in a vertical plane.

6. Motor vehicle having an arrangement of a storage module (32) according to Claim 4 or 5, **characterized in that** a bottom edge of the access opening (38, 44) comprises a vertical flange.

7. Motor vehicle having an arrangement of a storage module (32) according to one of Claims 1 to 6, **characterized in that** a vertical partition (46) extends over at least a part of a height (36) of the module (32) between the first zone (Z1) and the second zone (Z2).

8. Motor vehicle having an arrangement of a storage module (32) according to one of Claims 2 to 7, **characterized in that** the third zone (Z3) extends to the separating wall (30) between the cabin (23) and the loading zone (24), **and in that** the rear access opening (50) is delimited by the bottom wall (34) of the module (32) and a trim of the roof (12) and opens in the separating wall (30).

9. Motor vehicle having an arrangement of a storage module (32) according to one of Claims 1 to 8, **characterized in that** a vertical partition (48) separates the second zone (Z2) and the third zone (Z3).

10. Motor vehicle having an arrangement of a storage module (32) according to Claim 8, **characterized in that,** behind the third storage zone (Z3), the roof (12) is provided with a U-shaped support (52) so as to support a long object disposed in the third zone (Z3).
